# EUROPÄISCHE PATENTSCHRIFT

(11) **EP 2 955 426 B1**
(45) Veröffentlichungstag und Bekanntmachung des Hinweises auf die Patenterteilung: **25.01.2017**
(21) Anmeldenummer: 15171884.8
(22) Anmeldetag: 12.06.2015
(51) Int. Cl.: F16L 55/179, F16L 41/08

(54) **BAUSATZ ZUR SANIERUNG EINES ROHRLEITUNGSANSCHLUSSES**
CONSTRUCTION KIT FOR A PIPE CONDUIT CONNECTION
JEU DE PIÈCES DÉTACHÉES POUR L'ASSAINISSEMENT D'UN RACCORD DE TUYAUTERIE

(30) Priorität: 13.06.2014 DE 202014102750 U
(43) Veröffentlichungstag der Anmeldung: 16.12.2015
(73) Patentinhaber: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Habbel, Ludwig

(56) Entgegenhaltungen:
- EP-A1- 1 818 594
- WO-A2-2009/149458
- GB-A- 2 223 550
- JP-A- 2005 201 406
- US-A- 4 509 243
- US-A- 5 199 145

## Beschreibung

Die Erfindung betrifft einen Bausatz zur Sanierung eines Rohrleitungsanschlusses.

In der Praxis kommt es immer wieder vor, dass bei älteren Rohrleitungen, insbesondere Rohrleitungen aus mineralischen Baustoffen wie Beton, die Rohrleitungsanschlüsse defekt sind. Dort, wo ein Abzweig an eine Rohrleitung anschließt, beispielsweise in einem Winkel von etwa 90°, und wo daher in der Wand der Rohrleitung eine Anschlussöffnung vorgesehen ist, sind in vielen Fällen diese Anschlussöffnungen ausgebrochen. Eine daraus resultierende Leckage der Rohrleitung kann entweder zu einer Kontamination des umgebenden Bodens führen, oder es kann Grundwasser in die Rohrleitung eindringen und beispielsweise zu einer Überlastung von Kläranlagen führen. Aufgrund der Bruchlinien weisen die defekten Anschlussöffnungen einen unregelmäßig verlaufenden Rand auf.

Aus der EP 1 818 594 A1 ist eine Vorrichtung zur Herstellung einer Auskleidung einer Leitung oder Rohrleitung bekannt.

Aus der WO 2009/149458 A2 ist bekannt eine Kompressionsverschlussvorrichtung zum Reparieren von Leckagen in Rohren und Speicher- und Einschlussstrukturen.

Aus der JP 2005 201406 A ist eine Rohrreparaturvorrichtung bekannt für die Reparatur eines defekten Teils, wie beispielsweise einem Riss verursacht in Rohren, und ein Verfahren zum einfachen Reparieren von Rohren.

Die GB 2 223 550 A zeigt ein Verfahren zur Herstellung einer Anzapfstelle auf einem Rohr.

Aus der US 5 199 145 A ist ein Anschlag zum Abdichten einer Öffnung in der Seitenwand eines Rohrs gezeigt.

Die US 4 509 243 A zeigt ein Verfahren und eine Vorrichtung für die Abdichtung eines kleinen lokalen Lecks einer Rohrleitung sowie eine Blindseitenversiegelungsvorrichtung.

Der Erfindung liegt die Aufgabe zugrunde, einen Bausatz anzugeben, der es ermöglicht, einen beschädigten Rohrleitungsanschluss zu sanieren und einen dicht an die Rohrleitung anschließenden Stutzen bereitzustellen, an den dann die an die Rohrleitung anschließende zweite Rohrleitung wieder angeschlossen werden kann.

Diese Aufgabe wird durch einen Bausatz mit den Merkmalen des Anspruchs 1 gelöst. Vorteilhafte Ausgestaltungen des Bausatzes sind in den Unteransprüchen beschrieben.

Die Erfindung schlägt mit anderen Worten einen Bausatz vor, der im Wesentlichen sechs Bestandteile aufweist:
- Ein als Sanierungsstutzen bezeichneter Stutzen ist so bemessen, dass er in die beschädigte Anschlussöffnung der Rohrleitung eingesetzt werden kann.
- Der Sanierungsstutzen soll mit einem flüssigen Dichtungsmittel in die Rohrleitung eingeklebt werden. Das flüssige Dichtungsmittel, welches anschließend abbindet, stellt einerseits den Halt des Sanierungsstutzens in der Rohrleitung sicher und gewährleistet zweitens auch eine flüssigkeitsdichte Verbindung zwischen der bestehenden Rohrleitung und dem neu eingesetzten Sanierungsstutzen. Verluste aus der Rohrleitung und eine Kontaminationen des umgebenden Erdreichs werden ebenso vermeiden wie das Eindringen von Grundwasser in die Rohrleitung.

- Eine Abdichtplatte ist vorgesehen, um während der Montage des Sanierungsstutzens den verbleibenden ringförmigen Spalt, der sich zwischen dem Sanierungsstutzen und der umgebenden Rohrleitung ergibt, zum Inneren der Rohrleitung hin abzudichten. Diese Abdichtplatte weist zwei Schichten auf:
   Eine Abdichtungsschicht ist zur inneren Oberfläche der Wand der Rohrleitung ausgerichtet. Aufgrund ihrer vergleichsweise weichen Ausgestaltung aus einem ersten Werkstoff kann die Abdichtungsschicht Unebenheiten der Rohrleitungs-Oberfläche ausgleichen und dieser inneren Oberfläche flüssigkeitsdicht angelegt werden.

In der Rohrleitung weiter innen ist als zweite Schicht der Abdichtplatte eine vergleichsweise härtere Schicht aus einem zweiten Werkstoff vorgesehen, die als Stützschicht bezeichnet ist. Sie dient dazu, die Abdichtungsschicht abzustützen und gegen die innere Oberfläche der Rohrleitung pressen zu können.

Diese zweischichtige Abdichtplatte ist faltbar ausgestaltet, indem sie eine Knicklinie aufweist, entlang welcher sie gelenkig zusammengefaltet werden kann. In der zusammengefalteten Anordnung weist die Abdichtplatte so kleine Abmessungen auf, dass sie durch den Sanierungsstutzen hindurchgeführt werden kann. Wird sie demgegenüber um ihre Knicklinie auseinander gefaltet, so weist sie so große Abmessungen auf, dass sie sich zu allen Seiten hin radial über den Sanierungsstutzen hinaus erstreckt. In dieser auseinander gefalteten Anordnung kann sie also an die innere Wand der Rohrleitung angelegt werden, so dass sie einerseits die beschädigte Anschlussöffnung vollkommen überdeckt und zum zweiten auch die Anlage des Sanierungsstutzens an der Abdichtplatte ermöglicht. Der Kontakt des Sanierungsstutzens mit der weichen Abdichtungsschicht der Abdichtplatte ermöglicht dabei einen flüssigkeitsdichten Anschluss des Sanierungsstutzens an die Abdichtplatte, so dass ringsum das flüssige Dichtungsmittel eingefüllt werden kann, ohne in den Sanierungsstutzen zu fließen.
- Ein Zugelement ist vorgesehen, welches an die Stützschicht der Abdichtplatte anschließt und welches sich aus dem Inneren der Rohrleitung heraus durch den Sanierungsstutzen hindurch nach außen erstreckt. Indem an diesem Zugelement gezogen wird, kann also die Abdichtplatte von innen an die Wand der Rohrleitung angepresst werden und auf diese Weise die beschädigte Anschlussöffnung zum Inneren der Rohrleitung hin abdichten.
- Ein Stützjoch ist vorgesehen, welches sich quer über den Sanierungsstutzen erstreckt, indem es diesen Sanierungsstutzen mit einer Traverse übergreift. Von der Traverse aus erstrecken sich zwei Stützen in Richtung zur Rohrleitung. Das Stützjoch bildet ein Widerlager, an dem sich das Zugelement abstützt, um die Zugkräfte aufzufangen, die beim Zug auf die Abdichtplatte auftreten, um die Abdichtplatte nämlich von innen abdichtend an die Wand der Rohrleitung anzulegen.
- Weiterhin ist ein äußerer Kragen vorgesehen, der von außen, den Sanierungsstutzen umgebend, an die Außenseite der Rohrleitung angelegt wird. Dieser äußere Kragen liegt sowohl mit seiner Unterseite dicht an der Rohrleitung an als auch mit seinem radial inneren Rand dem Sanierungsstutzen dicht an.

Durch die beschriebene Anordnung der einzelnen Bauelemente des Bausatzes wird ein Dichtspalt geschaffen, der den Sanierungsstutzen innerhalb der Anschlussöffnung der Rohrleitung umgibt. In diesen Dichtspalt kann das flüssige Dichtungsmittel eingefüllt werden. Zu diesem Zweck weist der äußere Kragen eine Einfüllöffnung auf, die von außen zugänglich ist und das Einbringen des flüssigen Dichtungsmittels ermöglicht.

Der vorschlagsgemäße Bausatz ermöglicht es, einen beschädigten Rohrleitungsanschluss zu sanieren, wobei ein Zugang von außen zu der defekten Rohrleitung ausreichend ist, wodurch diese Reparaturmaßnahme in wirtschaftlich vorteilhafter Weise einfach ausgestaltet ist. Der vorliegende Vorschlag geht davon aus, dass ohnehin von außen der Bereich des defekten Rohrleitungsanschlusses freigelegt werden muss. Es wird also erübrigt, einen weiteren Zugang zu der Reparaturstelle vom Inneren der Rohrleitung her zu ermöglichen, beispielsweise vom nächsten Schacht aus, so dass es bei dem vorschlagsgemäßen Bausatz beispielsweise nicht erforderlich ist, Material oder Werkzeug über längere Strecken innerhalb der Rohrleitung zur Reparaturstelle zu bringen.

Wenn das flüssige Dichtungsmittel abgebunden ist, kann das Zugelement entlastet werden, so dass die Abdichtplatte von der Innenseite der Rohrleitung abgenommen werden kann. Insbesondere wenn das Zugelement nicht ausschließlich auf Zug belastbar ist, wie dies beispielsweise bei einem Seil, einer Kette o. dgl. der Fall ist, sondern wenn das Zugelement auch die Übertragung von Druckkräften ermöglicht, wie dies beispielsweise bei einer Stange der Fall ist, kann mithilfe dieses Zugelementes die Abdichtplatte in das Innere der Rohrleitung gestoßen werden und von der inneren Wandoberfläche der Rohrleitung entfernt werden.

Die Abdichtplatte kann anschließend um ihre Knicklinie gefaltet werden, so dass sie nun Abmessungen im zusammengefalteten Zustand aufweist, die es ermöglichen, diese zusammengefaltete Abdichtplatte durch den Sanierungsstutzen zu ziehen und somit aus der Rohrleitung zu entfernen. Dieser Faltvorgang kann beispielsweise durch die Schwerkraft unterstützt werden: Wenn das Zugelement nahe der Knicklinie an die Stützschicht der Abdichtplatte anschließt, dann wird nach Entlastung des Zugelementes die Abdichtplatte automatisch entlang der Knicklinie zwei nach unten hängende, flügelartige Abschnitte aufweisen und auf diese Weise ihre zusammengefaltete Stellung einnehmen. Um diesen Faltvorgang zu unterstützen, kann es jedoch auch vorgesehen sein, die Teile der Abdichtungsplatte beiderseits der Knicklinie mit einem Seilzug, oder mit einem Federelement zu verbinden, so dass die beiden Teile der Abdichtplatte entweder manuell mittels des erwähnten Seilzugs oder automatisch mittels des erwähnten Federelementes in ihre zusammengefaltete Stellung gebracht werden können.

Das Einbringen des flüssigen Dichtungsmittels kann beispielsweise mittels einer Kartusche erfolgen, die in einen pistolenähnlichen Halter eingespannt und mithilfe eines Handhebels entleert wird. Angesichts der zum Teil größeren Durchmesser der Rohrleitungen kann jedoch die erforderliche Menge des Dichtungsmittels vergleichsweise groß sein, beispielsweise mehr als einen Liter betragen, beispielsweise etwa zwei Liter. In diesem Fall ist eine besonders einfache Handhabung des flüssigen Dichtungsmittels dadurch möglich, dass dieses aus einem Eimer bzw. einer Dose ausgegossen wird. Dabei kann der Bausatz vorteilhaft einen Schlauch aufweisen, der flüssigkeitsdicht an die Einfüllöffnung des äußeren Kragens angeschlossen werden kann, so dass durch diesen Schlauch ein verlustfreies Einfüllen des flüssigen Dichtungsmittels in die Einfüllöffnung und somit in den Dichtspalt ermöglicht wird.

Dabei ist nicht nur der Schlauch, sondern auch ein Trichter vorgesehen, über den das flüssige Dichtungsmittel in den Schlauch eingegeben werden kann. Auf diese Weise wird nicht nur ein kleckerfreies Einfüllen des Dichtungsmittels in den Schlauch unterstützt, sondern der Trichter kann auch dazu dienen, eine überschüssige Menge des flüssigen Dichtungsmittels aufzunehmen. Je nach der konkreten Geometrie der beschädigten Anschlussöffnung ergibt sich ein unterschiedlich breiter Spalt zwischen dem Sanierungsstutzen und dem umgebenden Rand der Anschlussöffnung, und auch unterschiedliche Wandstärken der jeweiligen Rohrleitung bewirken unterschiedliche Volumina des Dichtspalts, so dass zu erwarten ist, dass die benötigte Menge des flüssigen Dichtungsmittels von Baustelle zu Baustelle unterschiedlich sein wird. Der Trichter ermöglicht es, die Menge des flüssigen Dichtungsmittels so groß zu bemessen, dass sämtliche in der Praxis auftretenden Anforderungen an die Menge des Dichtungsmittels erfüllt werden, und dass ggf. überschüssiges Dichtungsmittel in diesem Trichter aufgenommen werden kann.

Der Schlauch ist auch insofern vorteilhaft, als er das Einfüllen des Dichtungsmittels aus einer gewissen Höhe oberhalb der Einfüllöffnung ermöglicht. Der dadurch bedingte hydrostatische Druck unterstützt, dass das flüssige Dichtungsmittel den Dichtspalt vollständig ausfüllt und auch in kleinere Ritzen und flache Spaltquerschnitte eindringt.

Der flüssigkeitsdichte Anschluss des Schlauchs an die Einfüllöffnung des äußeren Kragens kann auf einfache Weise dadurch bewirkt werden, dass die Einfüllöffnung einen präzisen, bestimmten Durchmesser aufweist und der Schlauch als Wellrohr ausgestaltet ist, der eine wendelförmig verlaufende Verstärkung aufweist, die über dem übrigen Durchmesser des Wellrohrs nach außen ragt und einen geringfügig größeren Durchmesser aufweist als die Einfüllöffnung im äußeren Kragen. Auf diese Weise bildet das Wellrohr eine Art Gewinde, mit welchem es in die Einfüllöffnung eingeschraubt werden kann. So ist ein sicherer Anschluss des Schlauchs an die Einfüllöffnung gewährleistet und beispielsweise auch bei ungewollten Bewegungen des Wellrohrs sichergestellt, dass das Wellrohr nicht während des Befüllvorgangs von der Einfüllöffnung abgezogen wird. Zudem kann durch geringfügige Zugkräfte am Wellrohr auch die dichte Anlage des Wellrohrs am Rand der Einfüllöffnung unterstützt werden, so dass ein unerwünschtes Austreten von Dichtungsmittel vermieden werden kann.

Da die Abdichtplatte den Dichtspalt teilweise begrenzt und das Dichtungsmittel mit der äußeren Oberfläche der Abdichtungsschicht in Berührung kommt, kann vorteilhaft vorgesehen sein, dass diese Oberfläche das flüssige Dichtungsmittel abweisend ausgestaltet ist. Dies kann durch die Wahl des für die Abdichtungsschicht verwendeten Materials bewirkt werden oder dadurch, dass die Oberfläche der Abdichtungsschicht eine Beschichtung aufweist, welche das flüssige Dichtungsmittel abweist. Jedenfalls ist auf diese Weise gewährleistet, dass die Abdichtplatte nach der Vernetzung bzw. dem Abbinden des Dichtungsmittels problemlos von der inneren Wandoberfläche der Rohrleitung abgenommen werden kann und nicht etwa mit dem Dichtungsmittel verklebt.

Beispielsweise kann vorgesehen sein, dass die Oberfläche der Abdichtungsschicht silikonisiert ist, um die entsprechende Verklebung zu vermeiden.

Die Verwendung einer einzigen Knicklinie in der Abdichtplatte ermöglicht es, wie weiter oben beschrieben, die Abdichtplatte in Art zweier Flügel zusammenzufalten. Es können jedoch auch mehrere parallel verlaufende Knicklinien vorgesehen sein, so dass die Abdichtplatte entweder leporello- bzw. ziehharmonikaartig oder schneckenförmig in Art einer Rollbewegung zusammengefaltet werden kann. So können auch größere Durchmesser der Abdichtplatte verwirklicht werden und dennoch sichergestellt werden, dass diese in ihrem zusammengefalteten Zustand durch den Sanierungsstutzen aus der Rohrleitung herausgezogen werden kann.

Vorteilhaft ist die Abdichtplatte nicht an einen bestimmten Innendurchmesser der Rohrleitung angepasst, sondern vielmehr in einem solchen Maße biegsam ausgestaltet, dass sie unter Verformung an die Innenwand der Rohrleitung herangezogen werden kann, mithilfe des Zugelements, so dass sie auf diese Weise an Rohrleitungen mit unterschiedlichen Innendurchmessern angelegt werden kann.

Vorteilhaft kann der äußere Kragen transparent ausgestaltet sein. Auf diese Weise ist eine optische Kontrolle möglich, wie sich das flüssige Dichtungsmittel innerhalb des Dichtspalts verteilt.

Vorteilhaft kann der äußere Kragen flexibel ausgestaltet sein, so dass er an Rohrleitungen mit unterschiedlichen Durchmessern, hier nämlich äußeren Durchmessern, angelegt werden kann, ähnlich wie dies für die biegsame Abdichtplatte beschrieben wurde.

Zudem kann vorgesehen sein, den äußeren Kragen nicht monolithisch aus einem einzigen Werkstoff zu schaffen, sondern bereichsweise unterschiedliche Materialien zu verwenden, wie nachfolgend erläutert wird. Dabei kann der äußere Kragen einen Haupt- oder Grundkörper aus einem ersten Werkstoff aufweisen sowie dort, wo er dicht benachbarten Bauteilen anliegt, Dichtelemente aus einem oder mehreren anderen Werkstoffen.

Der äußere Kragen kann vorteilhaft einen Dichtrand aufweisen, welcher der Rohrleitung anliegt und den Dichtspalt begrenzt. Dieser Dichtrand dient ähnlich wie ein Abstandshalter dazu, eine direkte, vollflächige Anlage des äußeren Kragens an der Rohrleitung zu vermeiden. So wird ein definierter Spalt zwischen dem Grundkörper des äußeren Kragens und der äußeren Oberfläche der Rohrleitung sichergestellt, in welchen das flüssige Dichtungsmittel eindringen kann. Dadurch wird eine zuverlässige Verklebung des äußeren Kragens mit der Rohrleitung bewirkt und aufgrund der vergrößerten Dichtfläche eine zuverlässige Abdichtung bewirkt. Zudem wird der Sanierungsstutzen hierdurch auch mechanisch gegen Kräfte abgestützt, die ihn aus seiner axialen Ausrichtung auszulenken bestrebt sind.

Der erwähnte Dichtrand am äußeren Kragen kann vorteilhaft aus einem komprimierbaren Material bestehen, welches eine Vielzahl von Hohlräumen aufweist. Dieses kann beispielsweise ein anderer Werkstoff sein als der des Grundkörpers des äußeren Kragens. Auf diese Weise ist eine optimale Anpassung des Dichtrandes an Unebenheiten in der äußeren Oberfläche der Rohrleitung gewährleistet, so dass beispielsweise auch Kerben oder ähnliche Vertiefungen in dieser äußeren Oberfläche ausgefüllt und abgedichtet werden können.

Die zweite dichte Anlage des äußeren Kragens, nämlich an dem Sanierungsstutzen, die das Austreten von flüssigem Dichtungsmittel verhindert, kann vorteilhaft mittels einer flexiblen Dichtlippe sichergestellt werden. Diese Dichtlippe kann beispielsweise aus einem anderen Werkstoff bestehen als der Grundkörper des äußeren Kragens.

In wirtschaftlich vorteilhafter Weise kann diese Dichtlippe beispielsweise nicht als Formteil, sondern als ringförmiger Zuschnitt aus einem flächigen Material ausgestaltet sein. Der Innendurchmesser der Dichtlippe ist dabei geringer als der Außendurchmesser des Sanierungsstutzens, so dass die Dichtlippe dem Sanierungsstutzen eng anliegt und auf diese Weise dicht mit dem Sanierungsstutzen abschließt. Je größer dieser Unterschied ist, der den Innendurchmesser der Dichtlippe zum Außendurchmesser des Sanierungsstutzens aufweist, desto mehr Material stellt die Dichtlippe bereit, um axiale Verstellwege des Sanierungsstutzens zu ermöglichen, so dass der Sanierungsstutzen problemlos ausgerichtet und seine Lage an der Baustelle ggf. noch korrigiert werden kann. Beispielsweise kann der zunächst provisorisch ausgerichtete Sanierungsstutzen später noch tiefer in die Anschlussöffnung der Rohrleitung eingeführt werden, um dicht an die dort positionierte Abdichtplatte angelegt zu werden.

Der Sanierungsstutzen kann vorteilhaft ein Kugelgelenk aufweisen, wie dies an sich aus der Praxis bekannt ist. Der Sanierungsstutzen weist dabei eine Außenwand auf, die einen kugelsegmentartigen Abschnitt aufweist und innerhalb dieser Außenwand ist eine Muffe gelagert, die auf diese Weise kugelgelenkig gelagert ist, gegenüber der Außenwand abgedichtet ist, und welche den Anschluss einer zweiten Rohrleitung ermöglicht, die an die Rohrleitung mit der defekten Anschlussöffnung angeschlossen werden soll.

Das Stützjoch weist an den so genannten unteren Enden der Stützen, also dort, wo diese zur Rohrleitung hin enden, einen so genannten Stützfuß auf, nämlich einen Bereich, der einen größeren Querschnitt aufweist als die übrige Stütze. Durch diesen größeren Querschnitt wird eine Lastverteilung bewirkt und Beschädigungen dort vermieden, wo sich das Stützjoch mit seinen beiden Stützfüßen abstützt.

Vorteilhaft kann der Stützfuß einen Querschnitt aufweisen, der zur Rohrleitung hin konvex gerundet verläuft. Auf diese Weise wird eine im Wesentlichen linienförmige Anlage bewirkt und es ist keine Anpassung an einen bestimmten Außendurchmesser einer Rohrleitung erforderlich, wie dies beispielsweise bei einem konkav ausgeformten Stützfuß der Fall wäre, der durch diesen konkaven Verlauf an einen einzigen bestimmten Außendurchmesser optimal angepasst wäre, bei anderen Außendurchmessern jedoch scharfkantige Berührungslinien bewirken würde. Vorteilhaft kann vorgesehen sein, dass sich das Stützjoch nicht unmittelbar an der Rohrleitung abstützt, sondern vielmehr an dem äußeren Kragen. Auf diese Weise kann das Stützjoch beispielsweise dazu dienen, den äußeren Kragen an die gebogene äußere Oberfläche der Rohrleitung anzulegen, so dass beispielsweise ein weiter oben bereits erwähnter, flexibler äußerer Kragen verwendet werden kann, der nicht zur Verwendung an einen bestimmten Außendurchmesser einer Rohrleitung mit einer präzisen Formanpassung ausgestaltet ist, sondern vielmehr an unterschiedliche Rohrleitungsdurchmesser angepasst werden kann. Zusätzliche Spannmittel, beispielsweise um die Rohrleitung herum geschlungene Spanngurte o. dgl. sind nicht erforderlich, wenn ein derartiger äußerer Kragen mithilfe des Stützjochs an die Rohrleitung angepresst wird.

Vorteilhaft kann das Zugelement als Gewindestange ausgestaltet sein, so dass es nicht nur die Übertragung von Zugkräften ermöglicht, sondern auch von Druckkräften. Wenn das flüssige Dichtungsmittel ausgehärtet bzw. vernetzt ist, kann das Zugelement zunächst entlastet werden. Sollte die Abdichtplatte sich nicht problemlos von der Rohrinnenwand lösen, so kann über die Gewindestange auch Druck auf die Abdichtplatte ausgeübt werden, so dass diese durch entsprechenden Druck, der auf das Zugelement einwirkt, von der Innenwand der Rohrleitung abgelöst werden kann.

Vorteilhaft kann am Führungselement ein Zentrierstück vorgesehen sein, welches sich in den Sanierungsstutzen erstreckt. Das Zentrierstück dient dazu, eine gewünschte Ausrichtung des Sanierungsstutzens beizubehalten, während das Dichtungsmittel abbindet. Ein nach außen ragender Vorsprung verhindert, dass das Zentrierstück vollkommen in den Sanierungsstutzen eindringen kann und erleichtert auf diese Weise, das Zentrierstück anschließend wieder aus dem Sanierungsstutzen zu entnehmen. Zudem kann der nach außen ragende Vorsprung der dem Sanierungsstutzen entlang seiner äußeren Stirnfläche anliegt, dazu dienen, Druck auf den Sanierungsstutzen auszuüben und diesen an die Abdichtplatte anzupressen. Daher kann der Vorsprung des Zentrierstücks als umlaufender Kragen ausgestaltet sein, so dass eine möglichst gleichmäßige Druckverteilung bewirkt wird und versehentliche Beschädigungen, Einkerbungen o. dgl. am Sanierungsstutzen vermieden werden können.

Wenn das Zugelement als Gewindestange ausgestaltet ist, kann vorteilhaft eine Mutter auf der Gewindestange laufen und gegen das Stützjoch verspannt werden, um auf diese Weise die Abdichtplatte an die Innenwand der Rohrleitung heranzuziehen und abdichtend an diese Innenwand anzulegen. Auch um das Zentrierstück gegen den Sanierungsstutzen zu pressen und auf diese Weise den Sanierungsstutzen dicht an die Abdichtplatte anzupressen, kann eine dementsprechende Mutter vorgesehen sein, die auf der Gewindestange läuft. In diesen Fällen kann die jeweilige Mutter vorteilhaft als so genannte Gleitmutter ausgestaltet sein, also als eine Mutter, die sowohl auf dem Gewinde der Gewindestange durch Drehung läuft als auch in Längsrichtung der Gewindestange, ohne eine Drehbewegung, verschoben werden kann. Auf diese Weise können größere Verstellwege in kurzer Zeit überwunden werden, ohne dass die Mutter hierzu eine Vielzahl von Umdrehungen ausführen muss. Diese als Gleitmutter bezeichnete Mutter weist wenigstens zwei Teile auf, die auseinander gespreizt werden können, so dass das Gewinde der Mutter nicht mehr mit dem Gewinde der Gewindestange kämmt. In dieser Spreizstellung der Gleitmutter kann die Mutter in der beschriebenen Weise ohne eine Drehbewegung in Längsrichtung über die Gewindestange bewegt werden. Dabei ist der Gleitmutter eine Aufnahmehülse zugeordnet. Rein beispielhaft kann die Gleitmutter einen Konus aufweisen und die Aufnahmehülse einen Konussitz, so dass bei zunehmendem Kontakt der Gleitmutter mit der Aufnahmehülse die zunächst gespreizten Teile der Gleitmutter zusammengeführt werden und sich der Durchmesser der Gleitmutter verringert. Dabei kommt es zum Zusammenwirken zwischen dem Außengewinde der Gewindestange und dem Innengewinde der Gleitmutter, so dass nun die Gleitmutter nicht mehr ohne Drehbewegung in Längsrichtung der Gewindestange bewegt werden kann. Durch diesen Eingriff der beiden Gewinde kann die Gleitmutter jedoch in an sich bekannter Weise verschraubt werden und dementsprechende Kräfte aufbauen, um beispielsweise das Zugelement gegenüber dem Stützjoch zu verspannen oder das Zugelement gegenüber dem Zentrierstück zu verspannen.

Ein Ausführungsbeispiel der Erfindung wird anhand der rein schematischen Darstellungen näher erläutert. Dabei zeigt
- Fig. 1: eine Rohrleitung mit daran angesetztem Bausatz, der zur Sanierung eines Rohrleitungsanschlusses dieser Rohrleitung dient, wobei einige Elemente dieses Bausatzes auseinander gezogen dargestellt sind, und

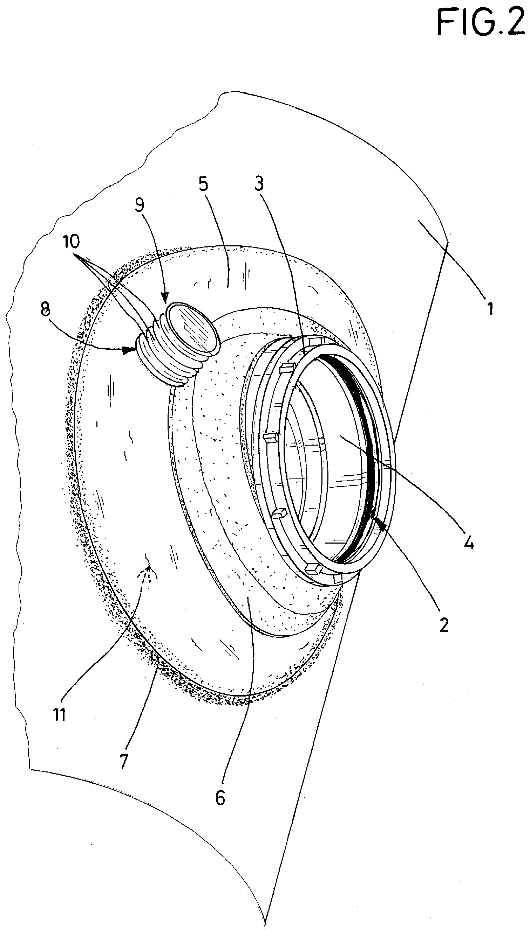

- Fig. 2: den sanierten Rohrleitungsanschluss in einer perspektivischen Ansicht ähnlich Fig. 1.

In den Zeichnungen ist mit 1 jeweils eine Rohrleitung bezeichnet, die eine beschädigte Anschlussöffnung aufweist. Zur Sanierung des Rohrleitungsanschlusses ist ein Sanierungsstutzen 2 in diese Anschlussöffnung eingesetzt. Der Sanierungsstutzen 2 weist eine Außenwand 3 auf, die kugelsegmentartig ausgestaltet ist und in welcher eine Muffe 4 kugelgelenkig gelagert ist. Der Sanierungsstutzen 2 schließt flüssigkeitsdicht an einen transparenten äußeren Kragen 5 an, indem der äußere Kragen 5 eine Dichtlippe 6 aufweist, die dem Sanierungsstutzen 2 anliegt. Entlang dem äußeren Umfang des Kragens 5 verläuft zur Rohrleitung 1 hin ein Dichtrand 7, der aus einem Schaummaterial besteht. Der Kragen 5 weist zudem eine Einfüllöffnung 8 auf, in welche ein Wellrohr 9 eingedreht ist. Das Wellrohr weist an seinem äußeren Umfang eine wendelförmig umlaufende Verstärkung 10 auf, so dass es wie eine Schraube in die Einfüllöffnung 8 eingeschraubt werden kann.

Hinter dem transparenten äußeren Kragen 5 ist ein Dichtungsmittel 11 ersichtlich, welches im flüssigen Zustand durch das Wellrohr 9 und die Einfüllöffnung 8 in einen Dichtspalt eingebracht worden ist und anschließend ausgehärtet bzw. abgebunden ist. Aufgrund der klebenden Wirkung des Dichtungsmittels 11 wird das Wellrohr 9 anschließend nicht mehr vom Kragen 5 entfernt, sondern in der Nähe der Einfüllöffnung 8 durchtrennt, so dass ein Teil des Wellrohrs 9 am Kragen 5 verbleibt und der andere Teil des Wellrohrs 9 von der Baustelle entfernt werden kann.

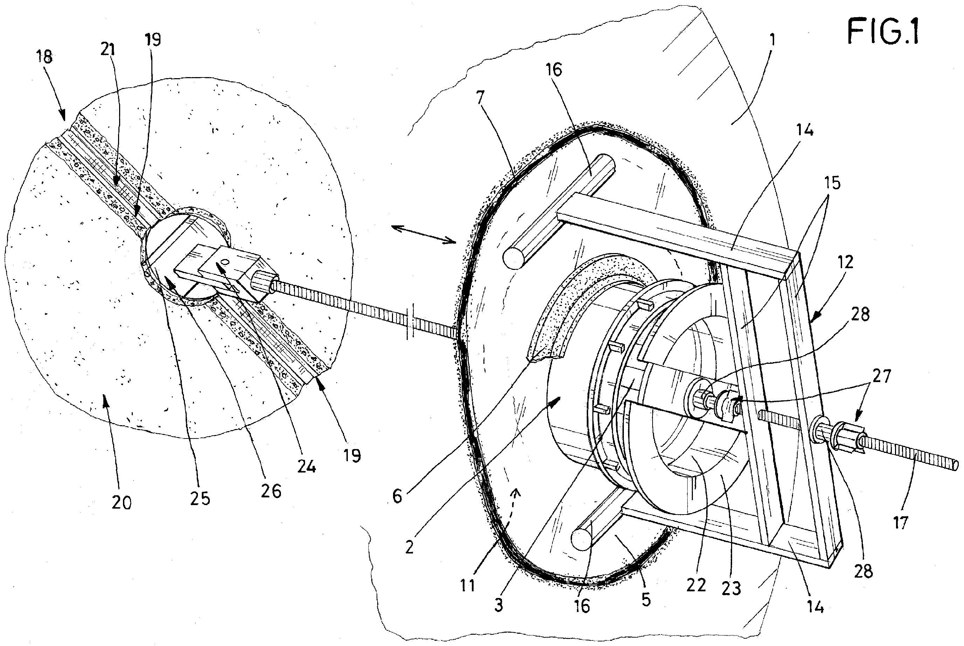

Der Bausatz zur Sanierung des Rohrleitungsanschlusses umfasst außer den bislang beschriebenen Elementen, die an der Rohrleitung 1 verbleiben, auch noch Werkzeuge, die ggf. wiederverwendet werden können. Dabei ist in Fig. 1 ein Stützjoch 12 dargestellt, welches zwei Stützen 14 aufweist und die an ihren so genannten oberen, von der Rohrleitung 1 entfernten Enden, durch Traversen 15 miteinander verbunden sind und die an ihren so genannten unteren, nämlich zur Rohrleitung 1 nahen Enden jeweils einen Stützfuß 16 aufweisen, der durch einen Abschnitt aus einem Rundrohr gebildet wird. Das Stützjoch 12 wird so an die Rohrleitung 1 angesetzt, dass die beiden Stützfüße 16 parallel zur Rohrlängsachse verlaufen. Sie liegen dabei dem äußeren Kragen 5 an.

Durch die Traversen 15 und axial durch die beschädigte Anschlussöffnung der Rohrleitung 1, also quer zur Rohrlängsachse, erstreckt sich ein Zugelement 17, welches als Gewindestange ausgestaltet ist. Es schließt im Inneren der Rohrleitung 1 an eine zweischichtige Abdichtplatte 18 an, und wirkt auf deren hintere, vergleichsweise härtere Stützschicht 19 ein, wie noch näher erläutert werden wird. Auf ihrer so genannten vorderen Seite, welche nämlich dem die Sanierungsarbeiten durchführenden Personal zugewandt ist und somit zur Innenfläche der Rohrleitung 1 gerichtet ist, die Abdichtplatte 18 eine Abdichtungsschicht 20 auf, die weicher ist als die Stützschicht 19. Durch die Abdichtplatte 18 verläuft eine Knicklinie 21, so dass die Abdichtplatte 18 zusammengefaltet werden kann in eine Faltstellung, in welcher die beiden Teile der Abdichtplatte 18 mit ihrer jeweiligen Stützschicht 19 aneinander anliegen. Diese Scharnierfunktion kann auf wirtschaftliche Weise dadurch verwirklicht sein, dass die Abdichtplatte 18 aus zwei Teilen gebildet ist, die entlang der Knicklinie 21 aneinander grenzen, und dass diese beiden Teile mittels eines textilverstärkten, das Scharnier bildenden Klebestreifens miteinander verbunden sind.

Der obersten der beiden Traversen 15 liegt eine Mutter 27 an, die dazu dient, die Abdichtplatte 18 von innen an die innere Oberfläche der Rohrleitung 1 zu pressen. Durch Betätigung der Mutter 27 wird die Abdichtplatte 18 in Richtung zur Traverse 15 hin gezogen. Die Abdichtplatte 18 ist so biegsam, dass sie sich dabei unter Verformung der beiden Stütz- und Abdichtungsschichten 19 und 20 von innen an die Rohrleitung 1 anlegt. Die Mutter 27 ist als an sich bekannte Gleitmutter ausgestaltet und wirkt mit einer Aufnahmehülse 28 zusammen, die sich an der Traverse 15 abstützt.

Nachdem die Abdichtplatte 18 von innen an die Rohrleitung 1 angelegt worden ist, wird der Sanierungsstutzen 2 tiefer in die beschädigte Anschlussöffnung eingeführt und gegen die Abdichtungsschicht 20 der Abdichtplatte 18 gepresst. Das untere Ende des Sanierungsstutzens 2 verläuft nicht in einer Ebene, sondern gebogen, so dass eine vollflächige und dichte Anlage dieses unteren Endes an der Abdichtplatte 18 möglich ist.

Der Sanierungsstutzen 2 wird durch ein hülsenartiges Zentrierstück 22 geführt. Der hülsenartige Abschnitt dieses Zentrierstücks 22 erstreckt sich nur über einen Teil der Länge des Sanierungsstutzens 2, so dass das untere Ende des Sanierungsstutzens 2 problemlos eingesehen werden kann. Auf diese Weise kann der Sanierungsstutzen 2 für eine optimale Anlage an der Abdichtplatte 18 ausgerichtet werden. Durch Drehung um seine Längsachse können diesbezügliche Korrekturen vorgenommen werden. Der Sanierungsstutzen 2 weist nämlich an seinem unteren Ende, welches in die beschädigte Anschlussöffnung der Rohrleitung 1 ragt, ein kurvig verlaufendes Ende auf, welches an den inneren Durchmesser der Rohrleitung 1 angepasst ist, so dass nach Montage des Sanierungsstutzens 2 kein hinderlicher Überstand des Sanierungsstutzens 2 in das Innere der Rohrleitung 1 hineinragt und über die Innenwand der Rohrleitung 1 nach innen vorsteht.

Ein außen umlaufender Kragen 23 des Zentrierstücks 22 ermöglicht eine gleichmäßige Druckverteilung auf das obere Stirnende des Sanierungsstutzens 2, wenn dieser nach innen, also gegen die Abdichtplatte 18, gepresst wird. Diese Verpressung des Zentrierstücks 22 und damit des Sanierungsstutzens 2 erfolgt ebenfalls mittels einer als Gleitmutter ausgestalteten Mutter 27, die mit einer Aufnahmehülse 28 zusammenwirkt.

Bei der zunehmenden Verspannung der Abdichtplatte 18 wird eine zunehmende Zugkraft durch das Zugelement 17 auf die Traverse 15 und somit auf das Stützjoch 12 übertragen, so dass das Stützjoch 12 zunehmend in Richtung zur Rohrleitung 1 gezogen wird. Hierdurch üben die Stützfüße 16 einen zunehmenden Druck auf den äußeren Kragen 5 auf, so dass sich dieser an den äußeren Umfang der Rohrleitung 1 anlegt. Diese Verformung des äußeren Kragens 5 und das Anlegen an die Rohrleitung 1 wird dadurch begünstigt, dass zuvor die Stützfüße 16 in Längsrichtung der Rohrleitung 1 ausgerichtet worden sind.

Beim Anpressen des äußeren Kragens 5 an die Rohrleitung 1 legt sich der Kragen 5 mit seinem äußeren Dichtrand 7 dicht an die Rohrleitung 1 an, und wenn anschließend der Sanierungsstutzen 2 fest und flüssigkeitsdicht an die Abdichtplatte 18 gepresst worden ist, unter Verwendung des Zentrierstücks 22, ist ein ringsum abgedichteter Dichtspalt geschaffen, der lediglich im Bereich der Einfüllöffnung 8 eine Verbindung nach außen aufweist.

Nach dem Abbinden des zunächst flüssig eingefüllten Dichtungsmittel werden die beiden Muttern 27 zunächst losgedreht, bis ihre mehreren Teile auseinander gespreizt werden können, so dass anschließend die Gleitmuttern in Längsrichtung über die Gewindestange verschoben werden können. Das Zugelement 17 wird dann in das Innere der Rohrleitung 1 geführt, so dass die Abdichtplatte 18 nicht nur von der Zugkraft entlastet ist, sondern mittels des Zugelements 17, welches nämlich auch Druckkräfte übertragen kann, in das Innere der Rohrleitung 1 bewegt wird. Dort kann es zusammengefaltet werden und anschließend durch den Sanierungsstutzen 2 aus der Rohrleitung 1 herausgezogen werden.

Aus Fig. 1 ist weiterhin ersichtlich, wie die Abdichtplatte 18 innerhalb der Rohrleitung 1 ausgerichtet ist, bevor sie mittels des Zugelements 17 an die Innenwand der Rohrleitung 1 herangezogen wird. Das Zugelement 17 schließt nicht unmittelbar an die Stützschicht 19 an, sondern vielmehr mittels eines Gelenks 24 an einen Querriegel 25. Die Abdichtplatte 18 ist ringförmig ausgestaltet. Sie weist eine Zentralöffnung 26 auf, deren Durchmesser kleiner ist als der Innendurchmesser des Sanierungsstutzens 2. So ist gewährleistet, dass das untere Ende des Sanierungsstutzens 2 dicht an der Abdichtplatte 18 anliegen kann. Die Abdichtplatte 18 ist gegenüber dem Zugelement 17 und dem Querriegel 25 frei beweglich.

Zur Montage und später zur Demontage wird die Abdichtplatte 18 jeweils so ausgerichtet, dass ihre Knicklinie 21 parallel zum Querriegel 25 verläuft. Die Abdichtplatte 18 wird zusammengefaltet, so dass der Querriegel 25 sich zwischen den beiden zusammengefalteten Teilen der Abdichtplatte 18 befindet. Nachdem die Abdichtplatte 18 in die Rohrleitung 1 eingebracht worden ist, wird sie in die aus Fig. 1 ersichtliche Anordnung gebracht: sie wird gegenüber dem Querriegel 25 verdreht, so dass ihre Knicklinie 21 quer zum Querriegel 25 verläuft. Dabei wird der Querriegel 25 so ausgerichtet, dass er in Längsrichtung der Rohrleitung 1 verläuft. Der anschließend über das Zugelement 17 und den Querriegel 25 auf die Abdichtplatte 18 aufgebrachte Anpressdruck legt die Abdichtplatte 18 von innen an die Wand der Rohrleitung 1 an, unter Verformung der Abdichtplatte 18.

Dieses Prinzip, die Abdichtplatte 18 mittels eines Querriegels 25 zu stützen, der wahlweise in unterschiedliche Stellungen gegenüber der Abdichtplatte 18 gebracht werden kann und außer der Stütz-Stellung auch eine Falt-Stellung der Abdichtplatte 18 ermöglicht, kann auch bei einem Bausatz zur Sanierung eines Rohrleitungsanschlusses vorgesehen werden, der ansonsten von dem dargestellten Ausführungsbeispiel abweicht.

## Patentansprüche

1. Bausatz zur Sanierung eines Rohrleitungsanschlusses,
▪ mit einem als Sanierungsstutzen (2) bezeichneten Rohrleitungsstutzen,
der zum Einsetzen in eine beschädigte Anschlussöffnung einer Rohrleitung (1) vorgesehen ist,
▪ einer an die Innenseite der Wand der Rohrleitung (1) anlegbare Abdichtplatte (18),
welche zwei Schichten aufweist,
von denen eine erste Schicht als zur Wand ausgerichtete Abdichtungsschicht (20) aus einem ersten Werkstoff ausgestaltet ist
und eine zweite, von der Wand abgewandte Stützschicht (19) aus einem im Vergleich zur Abdichtungsschicht (20) härteren, zweiten Werkstoff ausgestaltet ist,
und wobei die Abdichtplatte (18) um eine Knicklinie (21) gelenkig faltbar ausgestaltet ist, derart, dass sie in einem ersten, zusammengefalteten Zustand kleine, das Hindurchführen durch den Sanierungsstutzen (2) ermöglichende Abmessungen aufweist, und in einem zweiten, auseinandergefalteten, flächigen Zustand demgegenüber größere Abmessungen aufweist, derart, dass sie sich über den Sanierungsstutzen (2) in radialer Richtung ringsum hinaus erstreckt,
▪ einem Zugelement (17),
welches an die Stützschicht (19) der Abdichtplatte (18) anschließt
und sich aus dem Inneren der Rohrleitung (1) durch den Sanierungsstutzen (2) nach außen erstreckt,
▪ einem Stützjoch (12),
welches mit einer Traverse (15) den Sanierungsstutzen (2) übergreift
und zwei Stützen (14) aufweist, die sich außen neben dem Sanierungsstutzen (2) zur Rohrleitung (1) erstrecken,
wobei das Zugelement (17) an dem Stützjoch (12) zugkraftübertragend gelagert ist, derart, dass es eine die Abdichtplatte (18) an die Innenseite der Wand der Rohrleitung (1) anpressende Zugkraft auf das Stützjoch (12) überträgt,
▪ einen äußerer Kragen (5),
der den Sanierungsstutzen (2) umgibt,
der erstens der Rohrleitung (1) dicht anliegt,
zweitens dem Sanierungsstutzen (2) dicht anliegt, und der eine von außen zugängliche Einfüllöffnung (8) aufweist,
▪ sowie mit einem flüssigen Dichtungsmittel (11), welches durch die Einfüllöffnung (8) in einen Dichtspalt einfüllbar ist, welcher im Bereich der beschädigten Anschlussöffnung zwischen der Rohrleitung (1) und dem Sanierungsstutzen (2), sowie zwischen dem äußeren Kragen (5) und der Außenseite der Rohrleitung (1) verläuft.

2. Bausatz nach Anspruch 1,
**dadurch gekennzeichnet,**
**dass** der Bausatz einen dicht an die Einfüllöffnung (8) anschließbaren Schlauch sowie einen Trichter aufweist.

3. Bausatz nach Anspruch 2,
**dadurch gekennzeichnet,**
**dass** der Schlauch als Wellrohr (9) ausgestaltet ist, dessen Wand eine wendelförmig verlaufende, nach außen ragende Verstärkung (10) aufweist.

4. Bausatz nach einem der vorhergehenden Ansprüche,
**dadurch gekennzeichnet,**
**dass** die zur Wand der Rohrleitung (1) ausgerichtete Abdichtungsschicht (20) eine das Dichtungsmittel (11) abweisende Oberfläche aufweist.

5. Bausatz nach Anspruch 4,
**dadurch gekennzeichnet,**
**dass** die Oberfläche der Abdichtungsschicht (20) silikonisiert ist.

6. Bausatz nach einem der vorhergehenden Ansprüche,
**dadurch gekennzeichnet,**
**dass** die Abdichtplatte (18) mehrere parallele Knicklinien (21) aufweist, derart, dass sie in Art einer Rollbewegung zusammenfaltbar ist.

7. Bausatz nach einem der vorhergehenden Ansprüche,
**dadurch gekennzeichnet,**
**dass** die Abdichtplatte (18) biegsam ausgestaltet ist, derart, dass sie an die Innenwände von Rohrleitungen (1) mit unterschiedlichen Durchmessern anlegbar ist.

8. Bausatz nach einem der vorhergehenden Ansprüche,
**dadurch gekennzeichnet,**
**dass** der äußere Kragen (5) transparent ausgestaltet ist.

9. Bausatz nach einem der vorhergehenden Ansprüche,
**dadurch gekennzeichnet,**
**dass** der äußere Kragen (5) flexibel ausgestaltet ist, derart, dass er an unterschiedliche Außendurchmesser von Rohrleitungen (1) anpassbar ist.

10. Bausatz nach einem der vorhergehenden Ansprüche,
**dadurch gekennzeichnet,**
**dass** der äußere Kragen (5) einen Dichtrand (7) aufweist, der den Dichtspalt begrenzend an der Rohrleitung (1) anliegt.

11. Bausatz nach Anspruch 10,
**dadurch gekennzeichnet,**
**dass** der Dichtrand (7) aus einem komprimierbaren, Hohlräume aufweisenden Material besteht.

12. Bausatz nach einem der vorhergehenden Ansprüche,
**dadurch gekennzeichnet,**
**dass** der äußere Kragen (5) dem Sanierungsstutzen (2) mittels einer flexiblen Dichtlippe (6) dicht anliegt.

13. Bausatz nach Anspruch 12,
**dadurch gekennzeichnet,**
**dass** die Dichtlippe (6) als ringförmiger Zuschnitt aus einem flächigen Materialabschnitt ausgestaltet ist, dessen Innendurchmesser geringer ist als der Außendurchmesser des Sanierungsstutzens (2).

14. Bausatz nach einem der vorhergehenden Ansprüche,
**dadurch gekennzeichnet,**
**dass** der Sanierungsstutzen (2) eine Außenwand und eine darin kugelgelenkig gelagerte, den Anschluss einer zweiten Rohrleitung ermöglichende Muffe (4).

15. Bausatz nach einem der vorhergehenden Ansprüche,
**dadurch gekennzeichnet,**
**dass** das Stützjoch (12) an dem zur Rohrleitung (1) gerichteten, so genannten unteren Ende der Stützen (14) jeweils einen Stützfuß (16) aufweist, der einen größeren Querschnitt aufweist als die Stütze (14).

16. Bausatz nach Anspruch 15,
**dadurch gekennzeichnet,**
**dass** der Stützfuß (16) einen Querschnitt aufweist, welcher zur Rohrleitung (1) hin konvex gerundet verläuft.

17. Bausatz nach einem der vorhergehenden Ansprüche,
**dadurch gekennzeichnet,**
**dass** die Stützen (14) des Stützjochs (12) an ihren zur Rohrleitung (1) gerichteten, so genannten unteren Enden einen Abstand voneinander aufweisen, der geringer ist als der Durchmesser des äußeren Kragens (5), derart, dass der äußere Kragen (5) zwischen den unteren Enden der Stützen (14) und der Rohrleitung (1) festlegbar ist.

18. Bausatz nach einem der vorhergehenden Ansprüche,
**dadurch gekennzeichnet,**
**dass** das Zugelement (17) als Gewindestange ausgestaltet ist,
wobei eine Mutter (20) auf der Gewindestange läuft und gegen das als Widerlager dienende Stützjoch (12) spannbar ist.

19. Bausatz nach einem der vorhergehenden Ansprüche,
**dadurch gekennzeichnet,**
**dass** am Führungselement (17) ein Zentrierstück (22) vorgesehen ist,
welches sich den Sanierungsstutzen (2) zentrierend in den Sanierungsstutzen (2) erstreckt,
und welches einen radial nach außen ragenden, dem Sanierungsstutzen (2) anlegbaren Vorsprung aufweist.

20. Bausatz nach Anspruch 19,
**dadurch gekennzeichnet,**
**dass** der Vorsprung als umlaufender Kragen (23) ausgestaltet ist.

21. Bausatz nach Anspruch 19 oder 20,
**dadurch gekennzeichnet,**
**dass** das Zugelement (17) als Gewindestange ausgestaltet ist,
wobei eine Mutter (20) auf der Gewindestange läuft und gegen das als Widerlager dienende Zentrierstück (22) spannbar ist.

22. Bausatz nach Anspruch 18 oder 21,
**dadurch gekennzeichnet,**
**dass** die Mutter (20) als Gleitmutter ausgestaltet ist, mit wenigstens zwei Teilen, die den Durchmesser der Gleitmutter verändernd spreizbar sind,
wobei der Gleitmutter eine Aufnahmehülse (21) zugeordnet ist, welche bei zunehmendem Kontakt der Gleitmutter mit der Aufnahmehülse (21) den Durchmesser der Gleitmutter verringernd die wenigstens zwei Teile zusammenführt.

## Claims

1. Kit for reconstructing a pipe connection,
▪ comprising a pipe socket referred to as the reconstruction socket (2) which is provided for insertion into a damaged connection opening of a pipe (1),
▪ a sealing plate (18) for placing against the inside of the wall of the pipe (1), which sealing plate has two layers, of which a first layer is formed as a sealing layer (20) facing the wall and made of a first material, and a second supporting layer (19) facing away from the wall consisting of a second material which is harder compared to the sealing layer (20), and where the sealing plate (18) is designed to fold like a hinge around a bending line (21) in such a way that, in its first folded state, it is of a smaller size which allows it to pass through the reconstruction socket (2), and in its second unfolded state, it is of a larger size such that it extends beyond the reconstruction socket (2) in a radial direction around the entire circumference,
▪ a tensioning element (17) which adjoins the supporting layer (19) of the sealing plate (18) and extends out of the interior of the pipe (1) outwards through the reconstruction socket (2)
▪ a supporting yoke (12) which, with a crossbar (15), spans the reconstruction socket (2) and has two legs (14) which extend to the pipe (1) on the outside of the reconstruction socket (2), where the tensioning element (17) is mounted on and transmits its force to the supporting yoke (12) in such a way that it transmits its tensile force to the supporting yoke (12) thereby pressing the sealing plate (18) against the inside of the pipe (1) wall,
▪ an outer collar (5) which surrounds the reconstruction socket (2) which, firstly, lies close against the pipe (1) and secondly against the reconstruction socket (2) and which has a filler opening (8) accessible from the outside,
▪ and a liquid sealing agent (11) which can be poured through the filler opening (8) into a sealing gap which extends in the area of the damaged connection opening between the pipe (1) and the reconstruction socket (2) and between the outer collar (5) and the outside of the pipe (1).

2. Kit in accordance with claim 1, **characterised in that** the kit contains a hose which can be connected tightly to the filler opening (8), as well as a funnel.

3. Kit in accordance with claim 2, **characterised in that** the hose is designed as a corrugated pipe (9) whose wall has a spiral-shaped reinforcement (10) extending outwards.

4. Kit in accordance with any of the preceding claims, **characterised in that** the sealing layer (20) facing the wall of the pipe (1) has a surface which repels the sealing agent (11).

5. Kit in accordance with claim 4, **characterised in that** the surface of the sealing layer (20) is siliconised.

6. Kit in accordance with any of the preceding claims, **characterised in that** the sealing plate (18) has several parallel bending lines (21) which allow it to be folded by a movement similar to rolling.

7. Kit in accordance with any of the preceding claims, **characterised in that** the sealing plate (18) is designed to be pliable so that it can be laid against the interior walls of pipes (1) of different diameters.

8. Kit in accordance with any of the preceding claims, **characterised in that** the outer collar (5) is transparent.

9. Kit in accordance with any of the preceding claims, **characterised in that** the outer collar (5) is pliable so that it can be fitted to pipes (1) of different diameters.

10. Kit in accordance with any of the preceding claims, **characterised in that** the outer collar (5) has a sealing edge (7) which lies against the pipe (1) thus delimiting the sealing gap.

11. Kit in accordance with claim 10, **characterised in that** the sealing edge (7) is made of a compressible material containing cavities.

12. Kit in accordance with any of the preceding claims, **characterised in that** the outer collar (5) fits tightly against the reconstruction socket (2) by means of a pliable sealing lip (6).

13. Kit in accordance with claim 12, **characterised in that** the sealing lip (6) is a ring shape cut from a flat material whose inner diameter is less than the outer diameter of the reconstruction socket (2).

14. Kit in accordance with any of the preceding claims, **characterised in that** the reconstruction socket (2) has an outer wall and a sleeve (4) mounted on a ball joint therein which permits the connection of a second pipe.

15. Kit in accordance with any of the preceding claims, **characterised in that** the supporting yoke (12) has a supporting foot (16) at the so-called lower end of each leg (14) closest to the pipe (1), which foot has a larger cross-section than the leg (14).

16. Kit in accordance with claim 15, **characterised in that** the supporting foot (16) has a cross-section which is convex on the side facing the pipe (1).

17. Kit in accordance with any of the preceding claims, **characterised in that** the distance between the legs (14) of the supporting yoke (12) at their so-called lower end closest to the pipe (1), is less than the diameter of the outer collar (5) so that the outer collar (5) can be fixed between the lower ends of the legs (14) and the pipe (1).

18. Kit in accordance with any of the preceding claims, **characterised in that** the tensioning element (17) is formed as a threaded rod where a nut (20) runs on the threaded rod and can be tensioned against the supporting yoke (12) which provides a counter thrust.

19. Kit in accordance with any of the preceding claims, **characterised in that** a centring piece (22) is provided on the guiding element (17), which centring piece (22) extends into the reconstruction socket (2) while centring the reconstruction socket (2) and which has a projection projecting radially outwards which can be placed against the reconstruction socket (2).

20. Kit in accordance with claim 19, **characterised in that** the projection is formed as a circumferential collar (23).

21. Kit in accordance with claim 19 or claim 20, **characterised in that** the tensioning element (17) is formed as a threaded rod where a nut (20) runs on the threaded rod and can be tensioned against the centring piece (22) which provides a counter thrust.

22. Kit in accordance with claim 18 or claim 21, **characterised in that** the nut (20) is formed as a slide nut with at least two parts which can be widened to alter the diameter of the slide nut (20), where a sleeve (21) is provided for the slide nut which, as contact between the slide nut and the sleeve (21) increases, forces the (at least) two parts together, thereby reducing the diameter of the slide nut.

## Revendications

1. Kit d'assainissement d'un raccord de conduite,
▪ comprenant un embout de conduite appelé embout d'assainissement (2), qui est prévu pour être introduit dans l'orifice de raccord endommagé d'une conduite (1),
▪ une plaque d'étanchéité (18) applicable contre le côté intérieur de la paroi de la conduite (1), plaque qui présente deux couches, une première couche configurée en couche d'étanchéité (20) orientée vers la paroi et composée d'un premier matériau, et une seconde couche, d'appui (19), regardant en direction opposée de la paroi et configurée à partir d'un second matériau comparativement plus dur que celui de la couche d'étanchéité (20), et sachant que la plaque d'étanchéité (18) est configurée pliable de façon articulée autour d'une ligne de pliage (21) de sorte que, dans un premier état replié, elle présente de petites dimensions permettant de la faire passer à travers l'embout d'assainissement (2) et que dans un second état, déplié et étalé, elle présente des dimensions comparativement plus grandes de sorte à s'étendre dans le sens radial au-delà de l'embout d'assainissement (2), périphériquement à celui-ci,
▪ un élément de traction (17) se raccordant à la couche d'appui (19) de la plaque d'étanchéité (18) et qui s'étend vers l'extérieur, à travers l'embout d'assainissement (2), depuis l'intérieur de la conduite (1),
▪ un joug d'appui (12) qui avec une traverse (15) recouvre l'embout d'assainissement (2) et présente deux appuis (14) qui s'étendent à l'extérieur à côté de l'embout d'assainissement (2) vers la conduite (1), sachant que l'élément de traction (17) est en appui contre le joug d'appui (12) tout en transmettant la force de traction, de sorte à communiquer au joug d'appui (12) une force de traction appliquant la plaque d'étanchéité (18) contre le côté intérieur de la paroi de la conduite (1),
▪ un col extérieur (5) qui entoure l'embout d'assainissement (2), qui premièrement applique de façon étanche contre la conduite (1), qui deuxièmement applique de façon étanche contre l'embout d'assainissement (2), et qui présente un orifice de remplissage (8) accessible de l'extérieur,
▪ et comprenant un produit d'étanchéité (11) liquide qu'il est possible de verser dans un interstice d'étanchéité à travers l'orifice de remplissage (8), interstice dont le tracé est compris entre la conduite (1) et l'embout d'assainissement (2) ainsi qu'entre le col extérieur (5) et le côté extérieur de la conduite (1).

2. Kit selon la revendication 1, **caractérisé en ce que** ce kit présente un flexible raccordable de façon étanche à l'orifice de remplissage (8) ainsi qu'un entonnoir.

3. Kit selon la revendication 2, **caractérisé en ce que** le flexible est configuré en tuyau ondulé (9) dont la paroi présente un renforcement (10) au tracé hélicoïdal faisant saillie vers l'extérieur.

4. Kit selon l'une des revendications précédentes, **caractérisé en ce que** la couche d'étanchéité (20) regardant la paroi de la conduite (1) présente une surface n'offrant aucune adhérence au produit d'étanchéité (11).

5. Kit selon la revendication 4, **caractérisé en ce que** la surface de la couche d'étanchéité (20) est siliconée.

6. Kit selon l'une des revendications précédentes, **caractérisé en ce que** la plaque d'étanchéité (18) présente plusieurs lignes (21) de pliure parallèles de sorte à être repliable par une sorte de mouvement roulant.

7. Kit selon l'une des revendications précédentes, **caractérisé en ce que** la plaque d'étanchéité (18) est configurée cintrable de sorte à pouvoir l'appliquer contre les parois intérieures de conduites (1) présentant différents diamètres.

8. Kit selon l'une des revendications précédentes, **caractérisé en ce que** le col extérieur (5) est configuré transparent.

9. Kit selon l'une des revendications précédentes, **caractérisé en ce que** le col extérieur (5) est configuré flexible de sorte à pouvoir l'adapter à différents diamètres externes de conduites (1).

10. Kit selon l'une des revendications précédentes, **caractérisé en ce que** le col (5) extérieur présente une bordure d'étanchéité (7) qui applique contre la conduite (1) pour limiter l'interstice d'étanchéité.

11. Kit selon la revendication 10, **caractérisé en ce que** la bordure d'étanchéité (7) se compose d'un matériau compressible présentant des cavités.

12. Kit selon l'une des revendications précédentes, **caractérisé en ce que** le col (5) extérieur applique de façon étanche contre l'embout d'assainissement (2) au moyen d'une lèvre d'étanchéité (6) flexible.

13. Kit selon la revendication 12, **caractérisé en ce que** la lèvre d'étanchéité (6) est configurée en découpe annulaire au format réalisée dans un segment de matériau plat, dont le diamètre intérieur est inférieur au diamètre extérieur de l'embout d'assainissement (2).

14. Kit selon l'une des revendications précédentes, **caractérisé en ce que** l'embout d'assainissement (2) présente une paroi extérieure et un manchon (4), en appui sur articulation à rotule dedans, permettant le raccordement d'une deuxième conduite.

15. Kit selon l'une des revendications précédentes, **caractérisé en ce que** le joug d'appui (12) présente, contre l'extrémité dite inférieure - regardant vers la conduite (1) - des appuis (14), respectivement un pied d'appui (16) qui présente une section plus importante que l'appui (14).

16. Kit selon la revendication 15, **caractérisé en ce que** le pied d'appui (16) présente une section dont le tracé est d'un arrondi convexe en direction de la conduite (1).

17. Kit selon l'une des revendications précédentes, **caractérisé en ce que** les appuis (14) du joug d'appui (12) présentent, à leurs extrémités dites inférieures regardant la conduite (1), un écart mutuel inférieur au diamètre du col extérieur (5), de sorte que le col extérieur (5) peut être fixé entre les extrémités inférieures des appuis (14) et la conduite (1).

18. Kit selon l'une des revendications précédentes, **caractérisé en ce que** l'élément de traction (17) est configuré en tige filetée, sachant qu'un écrou (20) circule sur la tige filetée et peut être serré contre le joug d'appui (12) servant de palier antagoniste.

19. Kit selon l'une des revendications précédentes, **caractérisé en ce qu'**est prévue contre l'élément de guidage (17) une pièce de centrage (22) qui s'étend dans l'embout d'assainissement (2) tout en centrant l'embout d'assainissement (2), et qui présente une protubérance faisant radialement saillie vers l'extérieur et applicable contre l'embout d'assainissement (2).

20. Kit selon la revendication 19, **caractérisé en ce que** la protubérance est configurée en col (23) périphérique.

21. Kit selon la revendication 19 ou 20, **caractérisé en ce que** l'élément de traction (17) est configuré en tige filetée, sachant qu'un écrou (20) circule sur la tige filetée et qu'il peut être serré contre la pièce de centrage (22) officiant de palier antagoniste.

22. Kit selon la revendication 18 ou 21, **caractérisé en ce que** l'écrou (20) est configuré en écrou coulissant comprenant au moins deux parties expansibles pour modifier le diamètre de l'écrou coulissant, sachant qu'à l'écrou coulissant est affecté une douille réceptacle (21) qui, tandis que l'écrou coulissant entre de plus en plus en contact avec la douille réceptacle (21), rassemble au moins ces deux pièces tout en réduisant le diamètre de l'écrou coulissant.
